# EUROPÄISCHE PATENTSCHRIFT

(11) **EP 3 269 028 B1**
(45) Veröffentlichungstag und Bekanntmachung des Hinweises auf die Patenterteilung: **28.07.2021**
(21) Anmeldenummer: 15721597.1
(22) Anmeldetag: 23.04.2015
(51) Int. Cl.: H02M 3/158, H02J 3/18, H02J 7/00, H02M 1/32, H02M 7/483

(54) **ELEKTRISCHE ANORDNUNG MIT TEILMODULEN**
ELECTRICAL ARRANGEMENT COMPRISING SUB-MODULES
ENSEMBLE ÉLECTRIQUE DOTÉ DE MODULES PARTIELS

(43) Veröffentlichungstag der Anmeldung: 17.01.2018
(73) Patentinhaber: Siemens Energy Global GmbH & Co. KG, 81739 München (DE)
(72) Erfinder: ALVAREZ VALENZUELA, Rodrigo Alonso, 90408 Nürnberg (DE); PIESCHEL, Martin, 90473 Nürnberg (DE); SPAHIC, Ervin, 91052 Erlangen (DE)
(86) Internationale Anmeldenummer: PCT/EP2015/058781
(87) Internationale Veröffentlichungsnummer: WO 2016/169597

(56) Entgegenhaltungen:
- EP-A2- 2 698 912
- WO-A1-2009/073868
- WO-A1-2011/060823
- WO-A1-2014/169958
- WO-A2-2012/156261
- US-A1- 2012 018 777
- US-A1- 2014 175 888

## Beschreibung

Die Erfindung bezieht sich auf eine Anordnung, die zumindest eine Reihenschaltung mit mindestens zwei in Reihe geschalteten Teilmodulen und einer Induktivität umfasst.

Eine entsprechende Anordnung ist in der internationalen Patentanmeldung WO 2012/156261 A2 beschrieben. Bei dieser Anordnung handelt es sich um einen Multilevelumrichter.

Aus der EP 2 698 912 A2 ist ein Antriebsumrichter bekannt, der mehrere in Serie angeordnete Module umfasst. Die Module des bekannten Antriebsumrichters sind an ihrer Ausgangsseite jeweils mittels eines Überbrückungsschalters überbrückbar.

Aus der WO 2011/060823 A1 ist eine Anordnung mit Schaltmodulen bekannt, wobei jedes Schaltmodul einen Hochsetz-TiefsetzSteller aufweist, an den ein Energiespeicher angeordnet ist.

Der Erfindung liegt die Aufgabe zugrunde, eine Anordnung der eingangs angegebenen Art hinsichtlich der Betriebssicherheit zu verbessern.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass zumindest eines der Teilmodule einer oder mehrerer der Reihenschaltungen einen Hochsetz-Tiefsetzsteller und ein Speichermodul aufweist und elektrisch zwischen den Hochsetz-Tiefsetzsteller und das Speichermodul ein Schutzmodul mit mindestens einem Aktuator geschaltet ist.

Ein wesentlicher Vorteil der erfindungsgemäßen Anordnung ist darin zu sehen, dass sich - im Falle eines Fehlers - das Speichermodul von dem Hochsetz-Tiefsetzsteller mit Hilfe des Aktuators trennen lässt und somit verhindert werden kann, dass die in dem Speichermodul gespeicherte Energie eine Fehlerstelle im Hochsetz-Tiefsetzsteller oder in einem dem Hochsetz-Tiefsetzsteller vorgeordneten Modul der Anordnung speisen und zu weiterer Beschädigung oder kompletten Zerstörung der Anordnung führen kann. Mit anderen Worten kann das Schutzmodul die Anordnung vor innerer Zerstörung durch die Energie des Speichermoduls schützen, nachdem ein Fehlerfall erkannt worden ist und beispielsweise bereits eine Trennung der Anordnung von einem externen Energieverteilnetz stattgefunden hat und eine Speisung der Fehlerstelle von außen durch das Energieverteilnetz bereits unterbunden worden ist. Das Schutzmodul unterbindet also eine interne Speisung der Fehlerstelle und kann Sicherheitseinrichtungen, die zum Trennen der Anordnung von einem externen Energieverteilnetz und zum Unterbinden einer externen Speisung der Fehlerstelle vorgesehen sind, unterstützen.

Bei der Anordnung handelt es sich vorzugsweise um eine Umrichteranordnung, insbesondere eine Umrichteranordnung in Form eines Multilevelumrichters.

Erfindungsgemäß ist der oder einer der Aktuatoren des Schutzmoduls ein elektrischer Schalter, der elektrisch derart angeordnet ist, dass er im eingeschalteten Zustand einen ersten und einen zweiten Eingangsanschluss, mit denen das Schutzmodul an den Hochsetz-Tiefsetzsteller angeschlossen ist, und/oder einen ersten und einen zweiten Ausgangsanschluss, mit denen das Schutzmodul an das Speichermodul angeschlossen ist, kurzschließt.

Gemäß der Erfindung ist vorgesehen, dass das Schutzmodul einen ersten und einen zweiten Eingangsanschluss zum Anschluss an den Hochsetz-Tiefsetzsteller und mindestens zwei Aktua toren aufweist, von denen ein Aktuator zwischen den ersten Eingangsanschluss des Schutzmoduls und einen inneren Anschluss des Schutzmoduls oder zwischen den inneren Anschluss des Schutzmoduls und den zweiten Ausgangsanschluss und ein Aktuator zwischen den inneren Anschluss des Schutzmoduls und den zweiten Eingangsanschluss geschaltet ist.

Als besonders vorteilhaft wird es angesehen, wenn das Schutzmodul einen ersten und einen zweiten Eingangsanschluss zum Anschluss an den Hochsetz-Tiefsetzsteller und einen ersten und einen zweiten Ausgangsanschluss zum Anschluss an das Speichermodul aufweist und der zweite Eingangsanschluss und der zweite Ausgangsanschluss miteinander verbunden sind.

Bevorzugt weist das Schutzmodul mindestens drei Aktuatoren auf, von denen ein erster Aktuator zwischen einen inneren Anschluss des Schutzmoduls und den zweiten Eingangsanschluss des Schutzmoduls geschaltet ist, ein zweiter Aktuator zwischen den ersten Ausgangsanschluss des Schutzmoduls und den inneren Anschluss des Schutzmoduls geschaltet ist und ein dritter Aktuator zwischen den ersten Eingangsanschluss des Schutzmoduls und den inneren Anschluss des Schutzmoduls geschaltet ist.

Der erste Aktuator ist ein Schalter. Mit Blick auf kurze Schaltzeiten und ein sicheres Einschalten bzw. ein sicheres elektrisches Schließen ist der erste Aktuator ein irreversibel schaltender, pyrotechnisch angetriebener, Schalter

Der zweite und eventuell der dritte Aktuator weist eine Schmelzsicherung auf oder wird durch eine solche gebildet.

Mit Blick auf einen besonders zuverlässigen Schutz der Anordnung weist das Schutzmodul eine Auslöseeinheit auf, die ein Auslösesignal zum Einschalten bzw. elektrischen Schließen zumindest eines der Aktuatoren, insbesondere des ersten Aktuators, erzeugt, wenn zumindest eine elektrische Größe, insbe sondere ein Messwert, einen Fehlerfall anzeigt, insbesondere eine vorgegebene Schwelle erreicht oder überschreitet.

Erfindungsgemäß ist die Auslöseeinheit derart ausgestaltet, dass sie das Auslösesignal erzeugt, wenn der Betrag des Stromes am ersten oder zweiten Eingangsanschluss des Schutzmoduls eine vorgegebene erste Stromschwelle, der Betrag des Stromes am ersten oder zweiten Ausgangsanschluss des Schutzmoduls eine vorgegebene zweite Stromschwelle und/oder der Betrag der Spannung zwischen dem ersten und zweiten Ausgangsanschluss des Schutzmoduls eine vorgegebene Spannungsschwelle erreicht oder überschreitet.

Auch ist es vorteilhaft, wenn die Auslöseeinheit derart ausgestaltet ist, dass sie zumindest einen Schalter in dem vorgeordneten Hochsetz-Tiefsetzsteller einschaltet, wenn der Betrag des Stromes am ersten oder zweiten Eingangsanschluss des Schutzmoduls die erste Stromschwelle erreicht oder überschreitet.

Die Erfindung bezieht sich darüber hinaus auf ein Verfahren zum Betreiben einer Anordnung, die zumindest eine Reihenschaltung mit mindestens zwei in Reihe geschalteten Teilmodulen und einer Induktivität umfasst.

Bezüglich eines solchen Verfahrens ist erfindungsgemäß vorgesehen, dass zumindest eines der Teilmodule einer oder mehrerer der Reihenschaltungen einen Hochsetz-Tiefsetzsteller und ein Speichermodul umfasst und elektrisch zwischen den Hochsetz-Tiefsetzsteller und das Speichermodul ein Schutzmodul mit mindestens einem Aktuator geschaltet ist und das Schutzmodul den Hochsetz-Tiefsetzsteller von dem Speichermodul trennt, wenn zumindest eine elektrische Größe einen Fehlerfall anzeigt.

Bezüglich der Vorteile des erfindungsgemäßen Verfahrens sei auf die obigen Ausführungen im Zusammenhang mit der erfindungsgemäßen Anordnung verwiesen.

Die Erfindung wird nachfolgend anhand von Ausführungsbeispielen näher erläutert; dabei zeigen beispielhaft
- Figur 1: ein Ausführungsbeispiel für eine erfindungsgemäße Anordnung,
- Figur 2: ein Ausführungsbeispiel für eine Umrichtereinrichtung, die bei der Anordnung gemäß Figur 1 eingesetzt werden kann und eine Dreieckschaltung aufweist,
- Figur 3: ein Ausführungsbeispiel für eine mehrere Teilmodule aufweisende Reihenschaltung, die bei der Umrichtereinrichtung gemäß Figur 2 eingesetzt werden kann,
- Figur 4: ein Ausführungsbeispiel für ein Teilmodul, das bei der Reihenschaltung gemäß Figur 3 eingesetzt werden kann,
- Figur 5: ein Ausführungsbeispiel für ein Eingangsmodul, das bei dem Teilmodul gemäß Figur 4 eingesetzt werden kann,
- Figur 6: ein weiteres Ausführungsbeispiel für ein Eingangsmodul, das bei dem Teilmodul gemäß Figur 4 eingesetzt werden kann,
- Figur 7: ein Ausführungsbeispiel für einen HochsetzTiefsetzsteller, der bei dem Teilmodul gemäß Figur 4 eingesetzt werden kann,
- Figur 8: ein weiteres Ausführungsbeispiel für einen Hochsetz-Tiefsetzsteller, der bei dem Teilmodul gemäß Figur 4 eingesetzt werden kann,
- Figur 9: ein Ausführungsbeispiel für ein Schutzmodul, das bei dem Teilmodul gemäß Figur 4 eingesetzt werden kann,
- Figur 10: ein Ausführungsbeispiel für eine Auslöseeinheit für das Schutzmodul gemäß Figur 9,
- Figur 11: ein Ausführungsbeispiel für eine Umrichtereinrichtung, die bei der Anordnung gemäß Figur 1 eingesetzt werden kann und eine Sternschaltung aufweist,
- Figur 12: ein Ausführungsbeispiel für eine Umrichtereinrichtung, die bei der Anordnung gemäß Figur 1 eingesetzt werden kann und eine Brückenschaltung aufweist, und
- Figur 13: ein Ausführungsbeispiel für eine einphasige Umrichtereinrichtung, die bei einer einphasigen Anordnung eingesetzt werden kann.

In den Figuren werden der Übersicht halber für identische oder vergleichbare Komponenten stets dieselben Bezugszeichen verwendet.

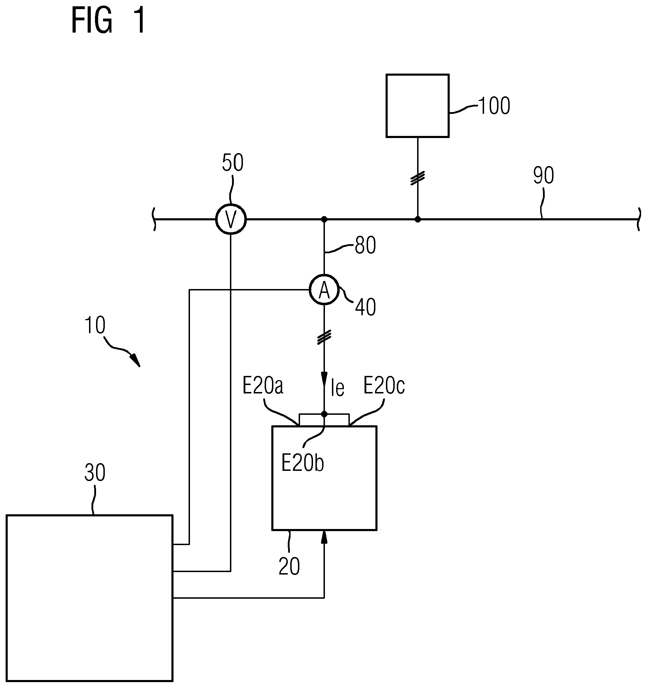

Die Figur 1 zeigt eine Anordnung 10, die eine Umrichtereinrichtung 20, eine Ansteuerschaltung 30, einen Stromsensor 40 sowie einen Spannungssensor 50 umfasst.

Die Umrichtereinrichtung 20 weist drei Eingangswechselspannungsanschlüsse E20a, E20b und E20c auf, die an eine dreiphasige elektrische Leitung 80 angeschlossen sind. Über die dreiphasige Leitung 80 steht die Umrichtereinrichtung 20 mit einer Anschlussschiene 90 und einem nur schematisch angedeuteten Energieverteilnetz 100 in Verbindung.

Die Anordnung 10 gemäß Figur 1 kann beispielsweise wie folgt betrieben werden:
Die Ansteuerschaltung 30 misst mittels des Stromsensors 40 den eingangsseitig in die Umrichtereinrichtung 20 hineinfließenden (oder aus dieser herausfließenden) dreiphasigen Eingangswechselstrom Ie und mit dem Spannungssensor 50 die an der Umrichtereinrichtung 20 anliegende dreiphasige Eingangsspannung und bestimmt mit diesen Messwerten den Zustand des Energieverteilnetzes 100. Außerdem ermittelt sie anhand von Messwerten, die von nicht weiter gezeigten Strom- und/oder Spannungssensoren innerhalb der Umrichtereinrichtung 20 erfasst werden, den Arbeitszustand der Umrichtereinrichtung 20.

Mit Hilfe der Messwerte ermittelt die Ansteuerschaltung 30 eine optimale Ansteuerung der Umrichtereinrichtung 20 derart, dass das Energieverteilnetz 100 einen möglichst optimalen Netzzustand annimmt und sich die Umrichtereinrichtung 20 in einem günstigen Arbeitszustand befindet, in dem jederzeit Leistung zur Verfügung gestellt oder aufgenommen werden kann.

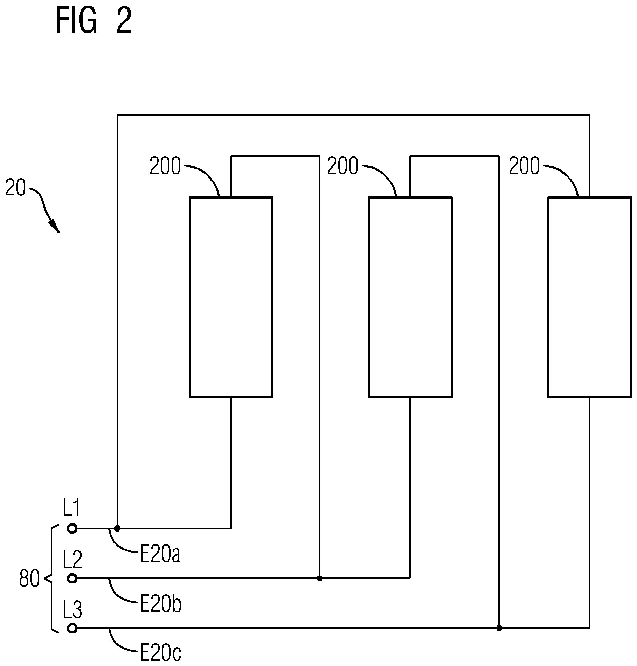

Die Figur 2 zeigt ein Ausführungsbeispiel für eine Umrichtereinrichtung 20, die bei der Anordnung 10 gemäß Figur 1 eingesetzt werden kann. Man erkennt die drei Eingangswechselspannungsanschlüsse E20a, E20b und E20c, die an die dreiphasige Leitung 80 gemäß Figur 1 angeschlossen sind. Die drei Phasen der dreiphasigen Leitung 80 sind in der Figur 2 mit dem Bezugszeichen L1, L2 und L3 gekennzeichnet.

Die Umrichtereinrichtung 20 weist drei im Dreieck verschaltete Reihenschaltungen 200 auf, deren in Reihe geschaltete Komponenten aus Gründen der Übersicht in der Figur 2 nicht näher dargestellt sind.

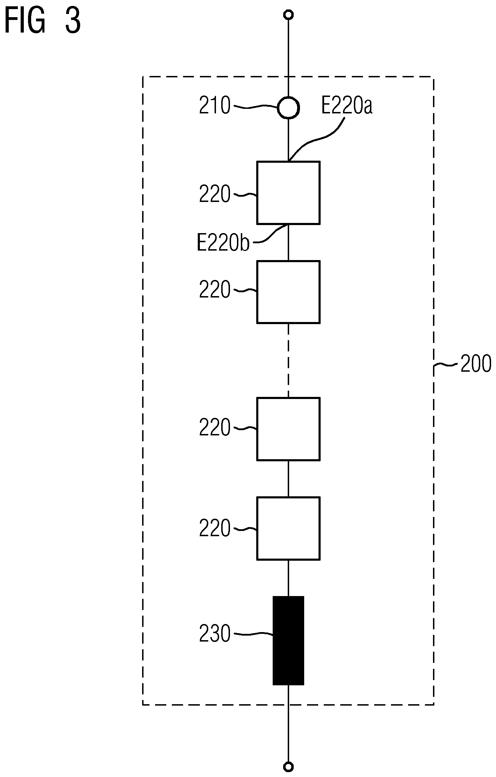

Die Figur 3 zeigt ein Ausführungsbeispiel für eine Reihenschaltung 200, die bei der Umrichtereinrichtung 20 gemäß Figur 2 eingesetzt werden kann. Die Reihenschaltung 200 gemäß Figur 3 weist einen vorzugsweise an die Ansteuerschaltung 30 gemäß Figur 1 angeschlossenen Stromsensor 210, eine Vielzahl an Teilmodulen 220 sowie eine Induktivität 230 auf. Der Stromsensor 210, die Teilmodule 220 sowie die Induktivität 230 sind elektrisch in Reihe geschaltet. Die Reihenschaltung der Teilmodule 220 erfolgt über deren Eingangsanschlüsse E220a und E220b.

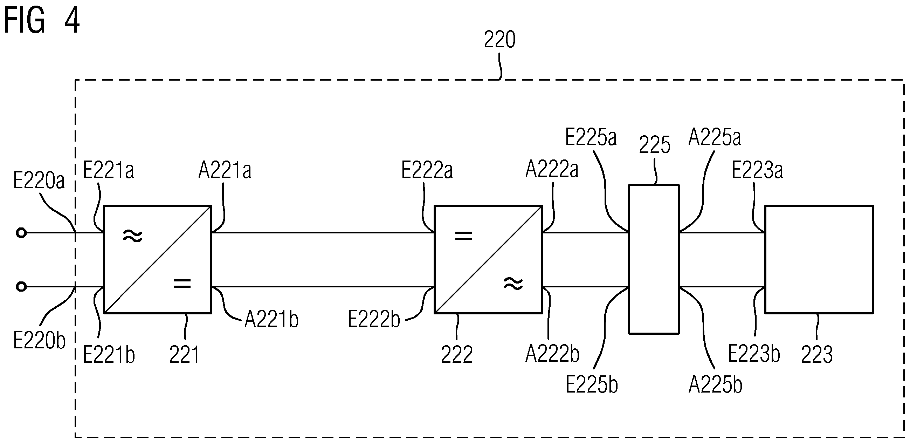

Die Figur 4 zeigt ein Ausführungsbeispiel für ein Teilmodul 220, das bei der Reihenschaltung 200 gemäß Figur 3 eingesetzt werden kann. Das Teilmodul 220 umfasst ein Eingangsmodul 221, bei dem es sich um ein Umrichtermodul zur AC/DC(Wechselspannungs/Gleichspannungs)-Umsetzung handelt, einen Hochsetz-Tiefsetzsteller 222, ein Speichermodul 223 und ein zwischen den Hochsetz-Tiefsetzsteller 222 und das Speichermodul 223 geschaltetes Schutzmodul 225.

Das Eingangsmodul 221, der Hochsetz-Tiefsetzsteller 222, das Schutzmodul 225 und das Speichermodul 223 sind kaskadiert hintereinander angeordnet. Dies bedeutet, dass die Ausgänge A221a und A221b des Eingangsmoduls 221 an die Eingänge E222a und E222b des Hochsetz-Tiefsetzstellers 222 und die Ausgänge A222a und A222b des Hochsetz-Tiefsetzstellers 222 an die Eingänge E225a und E225b des Schutzmoduls 225 und die Ausgänge A225a und A225b des Schutzmoduls 225 an die Eingänge E223a und E223b des Speichermoduls 223 angeschlossen sind. Die Eingänge E221a und E221b des Eingangsmoduls 221 gemäß Figur 4 bilden die Eingänge E220a und E220b des Teilmoduls 220, die zur Bildung der Reihenschaltung der Teilmodule 220 (vgl. Figur 3) mit den Eingängen E221a und E221b von Eingangsmodulen 221 vor- und nachgeordneter Teilmodule 220 in Reihe geschaltet sind (vgl. Figur 3).

Das Speichermodul 223 weist als Energiespeicher vorzugsweise einen oder mehrere Doppelschichtkondensatoren auf, die in der Figur 4 aus Gründen der Übersicht nicht näher dargestellt sind.

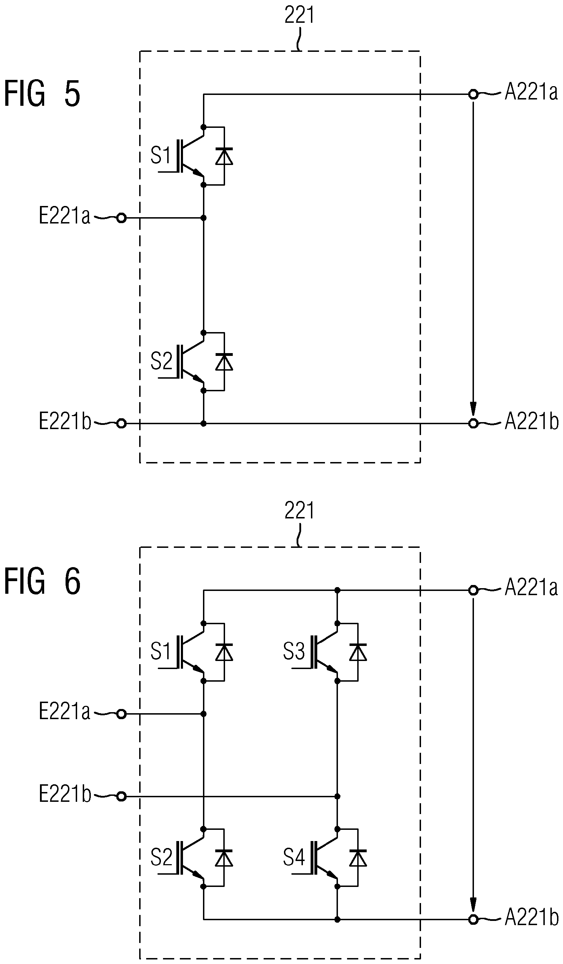

Die Figur 5 zeigt ein Ausführungsbeispiel für ein Eingangsmodul 221, das bei dem Teilmodul 220 gemäß Figur 4 eingesetzt werden kann. Das Eingangsmodul 221 umfasst zwei Schaltelemente S1 und S2, zu denen jeweils eine Diode parallel geschaltet ist. Bei den Schaltelementen S1 und S2 kann es sich beispielsweise um Halbleiterschalter, z. B. in Form von Transistoren, handeln. Die Ausgänge des Eingangsmoduls 221 sind in den Figuren 4 und 5 mit den Bezugszeichen A221a und A221b gekennzeichnet und an die Eingänge E222a und E222b des nachgeordneten Hochsetz-Tiefsetzstellers 222 angeschlossen.

Die Ansteuerung der Schaltelemente S1 und S2 des Eingangsmoduls 221 erfolgt vorzugsweise durch die Ansteuerschaltung 30 gemäß Figur 1 in Abhängigkeit von den Strom- und Spannungswerten, die die Ansteuerschaltung 30 erfasst und auswertet.

Die Figur 6 zeigt ein weiteres Ausführungsbeispiel für ein Eingangsmodul 221, das bei dem Teilmodul 220 gemäß Figur 4 eingesetzt werden kann. Das Eingangsmodul 221 umfasst vier Schaltelemente S1, S2, S3 und S4, zu denen jeweils eine Diode parallel geschaltet ist. Die vier Schaltelemente S1 bis S4 sind in Form einer H-Brückenschaltung verschaltet und werden vorzugsweise von der Ansteuerschaltung 30 gemäß Figur 1 in Abhängigkeit von den Strom- und Spannungswerten angesteuert, die von den beiden Sensoren 40 und 50 und den übrigen bereits erwähnten, aber nicht näher gezeigten, Sensoren geliefert werden. Die Ausgänge des Eingangsmoduls 221 sind in den Figuren 4 bis 6 mit den Bezugszeichen A221a und A221b gekennzeichnet und an die Eingänge E222a und E222b des nachgeordneten Hochsetz-Tiefsetzstellers 222 angeschlossen.

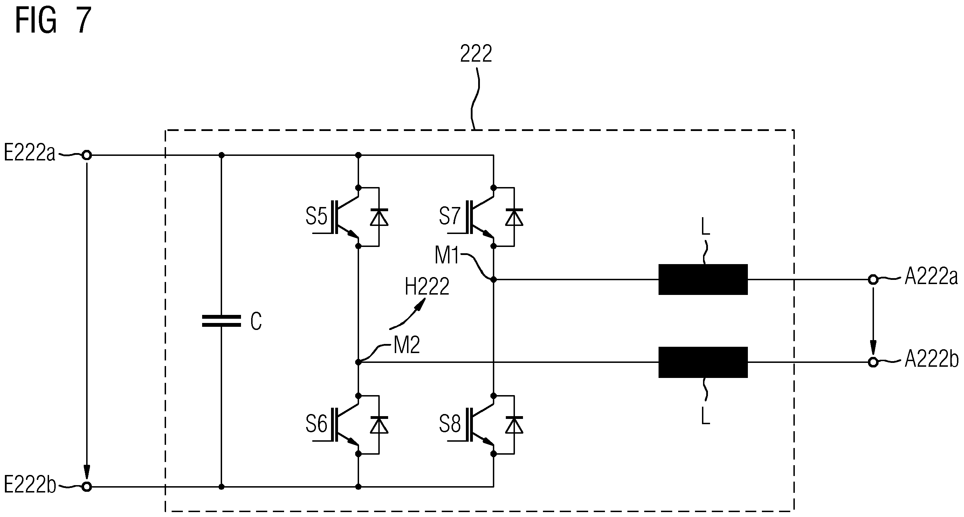

Die Figur 7 zeigt ein Ausführungsbeispiel für einen Hochsetz-Tiefsetzsteller 222, der bei dem Teilmodul 220 gemäß Figur 4 eingesetzt werden kann. Der Hochsetz-Tiefsetzsteller 222 gemäß Figur 7 weist vier Schaltelemente S5, S6, S7 und S8 auf, zu denen jeweils eine Diode parallel geschaltet ist. Die vier Schaltelemente S5, S6, S7 und S8 sind in Form einer H-Brückenschaltung H222 verschaltet, deren äußere Anschlüsse die Eingänge E222a und E222b des Hochsetz-Tiefsetzstellers 222 bilden.

Zu der H-Brückenschaltung H222 parallel geschaltet ist ein Kondensator C, der somit ebenfalls parallel zu den Eingangsanschlüssen E222a und E222b des Hochsetz-Tiefsetzstellers 222 liegt.

Mittenanschlüsse M1 und M2 der H-Brückenschaltung H222 sind über jeweils eine Induktivität L, vorzugsweise in Form einer Drossel, an die Ausgangsanschlüsse A222a und A222b des Hochsetz-Tiefsetzstellers 222 angeschlossen. Alternativ kann auch nur einer der beiden Mittenanschlüsse M1 oder M2 der H-Brückenschaltung H222 über eine Induktivität L, vorzugsweise in Form einer Drossel, an den jeweiligen Ausgangsanschluss A222a bzw. A222b des Hochsetz-Tiefsetzstellers 222 angeschlossen sein.

Die Ausgangsanschlüsse A222a und A222b des Hochsetz-Tiefsetzstellers 222 sind an die Eingangsanschlüsse E225a und E225b des nachgeschalteten Schutzmoduls 225 (vgl. Figur 4) angeschlossen.

Die Ansteuerung der vier Schaltelemente S5, S6, S7 und S8 erfolgt vorzugsweise durch die Ansteuerschaltung 30 gemäß Figur 1 in Abhängigkeit von den Messwerten, die von den beiden Sensoren 40 und 50 und den übrigen bereits erwähnten, aber nicht näher gezeigten, Sensoren geliefert werden.

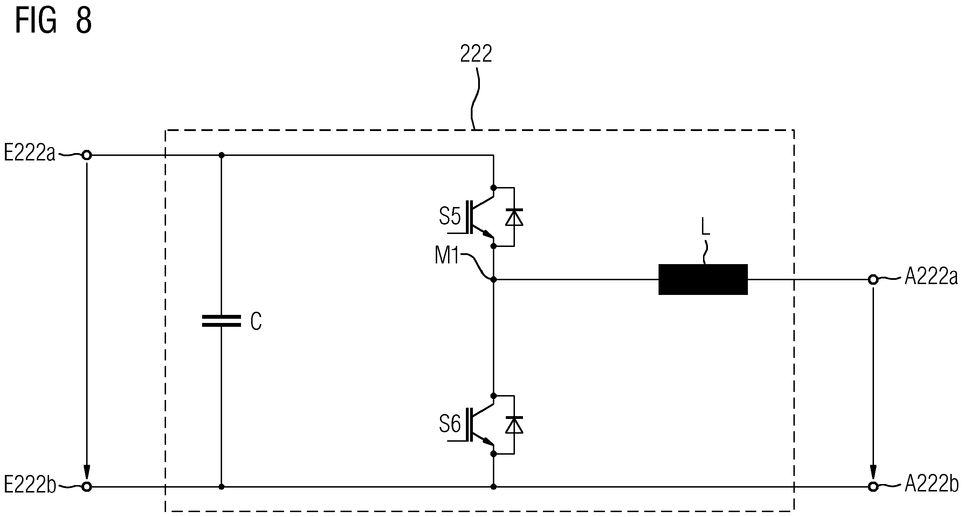

Die Figur 8 zeigt ein weiteres Ausführungsbeispiel für einen Hochsetz-Tiefsetzsteller 222, der bei dem Teilmodul 220 gemäß Figur 4 eingesetzt werden kann. Der Hochsetz-Tiefsetzsteller 222 gemäß Figur 7 weist zwei Schaltelemente S5 und S6 auf, zu denen jeweils eine Diode parallel geschaltet ist. Die zwei Schaltelemente S5 und S6 sind in Reihe geschaltet.

Zu der Reihenschaltung der Schaltelemente S5 und S6 parallel geschaltet ist ein Kondensator C, der somit ebenfalls parallel zu den Eingangsanschlüssen E222a und E222b des Hochsetz-Tiefsetzstellers 222 liegt.

Ein Mittenanschluss M1 der Reihenschaltung ist über eine Induktivität L, vorzugsweise in Form einer Drossel, an den Ausgangsanschluss A222a des Hochsetz-Tiefsetzstellers 222 angeschlossen.

Die Ausgangsanschlüsse A222a und A222b des Hochsetz-Tiefsetzstellers 222 sind an die Eingangsanschlüsse E225a und E225b des nachgeschalteten Schutzmoduls 225 (vgl. Figur 4) angeschlossen.

Die Ansteuerung der zwei Schaltelemente S5 und S6 erfolgt vorzugsweise durch die Ansteuerschaltung 30 gemäß Figur 1 in Abhängigkeit von den Messwerten, die von den beiden Sensoren 40 und 50 und den übrigen bereits erwähnten, aber nicht näher gezeigten, Sensoren geliefert werden.

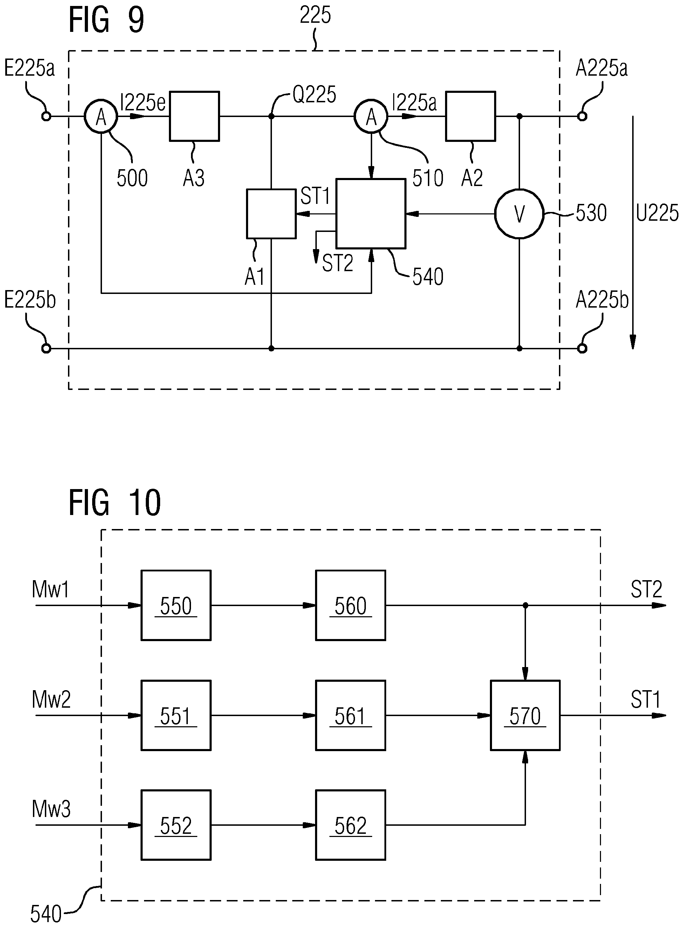

Die Figur 9 zeigt ein Ausführungsbeispiel für ein Schutzmodul 225, das bei dem Teilmodul 220 gemäß Figur 4 eingesetzt wird.

Das Schutzmodul 225 weist drei Aktuatoren A1, A2 und A3 auf, von denen ein erster Aktuator A1 zwischen einen inneren Anschluss Q225 des Schutzmoduls 225 und den in der Figur 9 unteren Eingangsanschluss E225b des Schutzmoduls 225 geschaltet ist, ein zweiter Aktuator A2 zwischen den in der Figur 9 oberen Ausgangsanschluss A225a des Schutzmoduls 225 und den inneren Anschluss Q225 des Schutzmoduls 225 geschaltet ist und ein dritter Aktuator A3 zwischen den in der Figur 9 oberen Eingangsanschluss E225a des Schutzmoduls 225 und den inneren Anschluss Q225 des Schutzmoduls 225 geschaltet ist.

Bei dem ersten Aktuator A1 handelt es sich um einen irreversibel schaltenden, pyrotechnisch angetriebenen Schalter.

Bei dem zweiten und dritten Aktuator A2 und A3 handelt es sich um Schmelzsicherungen.

Das Schutzmodul 225 weist außerdem einen Stromsensor 500 zum Messen des Stromes I225e am Eingangsanschluss E225a des Schutzmoduls 225, einen Stromsensor 510 zum Messen des Stromes I225a am Ausgangsanschluss E225a des Schutzmoduls 225 und einen Spannungssensor 530 zum Messen der Spannung U225 zwischen den Ausgangsanschlüssen A225a und A225b des Schutzmoduls 225 auf.

Darüber hinaus ist das Schutzmodul 225 mit einer Auslöseeinheit 540 ausgestattet, die ein Auslösesignal ST1 zum Einschalten bzw. elektrischen Schließen des ersten Aktuators A1 erzeugt, wenn zumindest einer der Messwerte des Stromsensors 500, des Stromsensors 510 oder des Spannungssensors 530 einen Fehlerfall anzeigt, insbesondere eine vorgegebene Schwelle erreicht oder überschreitet.

Die Auslöseeinheit 540 ist derart ausgestaltet, dass sie das Auslösesignal ST1 erzeugt, wenn der Betrag des Stromes I225e eine vorgegebene erste Stromschwelle, der Betrag des Stromes I225a eine vorgegebene zweite Stromschwelle und/oder der Betrag der Spannung U225 zwischen dem ersten und zweiten Ausgangsanschluss des Schutzmoduls 225 eine vorgegebene Spannungsschwelle erreicht oder überschreitet.

Bei dem Ausführungsbeispiel gemäß Figur 9 ist die Auslöseeinheit 540 vorzugsweise außerdem derart ausgestaltet, dass sie ein Auslösesignal ST2 erzeugt, wenn der Betrag des Stromes I225e die vorgegebene erste Stromschwelle erreicht oder überschreitet. Das Auslösesignal ST2 überträgt die Auslöseeinheit 540 zu dem vorgeordneten Hochsetz-Tiefsetzsteller 222 und schaltet damit dessen Schaltelement S6 im Falle des Hochsetz-Tiefsetzsteller 222 gemäß Figur 8 oder dessen Schaltelemente S6 und S8 im Falle des Hochsetz-Tiefsetzsteller 222 gemäß Figur 7 ein.

Die Figur 10 zeigt ein Ausführungsbeispiel für die Auslöseeinheit 540 gemäß Figur 9 näher im Detail. Man erkennt drei Betragsbildner 550, 551 und 552, an denen eingangsseitig Messwerte Mw1, Mw2 bzw. Mw3 anliegen. Der Messwert Mw1 wird vom Stromsensor 500 (vgl. Figur 9) erzeugt und gibt die Größe des Stroms I225e an; der Messwert Mw2 wird vom Stromsensor 510 erzeugt und gibt die Größe des Stromes I225a an; und der Messwert Mw3 wird vom Spannungssensor 530 erzeugt und gibt die Größe der Spannung U225 an.

Die drei Betragsbildner 550, 551 und 552 bilden von den Messwerten Mw1 bis Mw3 die Beträge und leiten diese an nachgeordnete Komparatoren 560, 561 und 562 weiter. Die Komparatoren 560, 561 und 562 erzeugen ausgangsseitig jeweils eine logische "Eins", wenn der eingangsseitig anliegende Betrag eine vorgegebene Schwelle erreicht oder überschreitet und andernfalls eine logische "Null". Das Ausgangssignal des Komparators 560 bildet unmittelbar das oben erwähnte Auslösesignal ST2 zum Einschalten bzw. elektrischen Schließen von Schaltelementen des vorgeordneten Hochsetz-Tiefsetzstellers 222.

Den Komparatoren 560, 561 und 562 nachgeordnet ist ein Oder-Glied 570, an dem eingangsseitig die logischen Ausgangssignale der Komparatoren 560, 561 und 562 anliegen. Das Oder-Glied 570 erzeugt einen logische "Eins" und damit das Auslösesignal ST1 zum Einschalten bzw. elektrischen Schließen des ersten Aktuators A1, wenn zumindest eine logische "Eins" eingangsseitig anliegt, wenn also zumindest einer der Messwerte des Stromsensors 500, des Stromsensors 510 oder des Spannungssensors 530 einen Fehlerfall anzeigt, insbesondere eine vorgegebene Schwelle erreicht oder überschreitet.

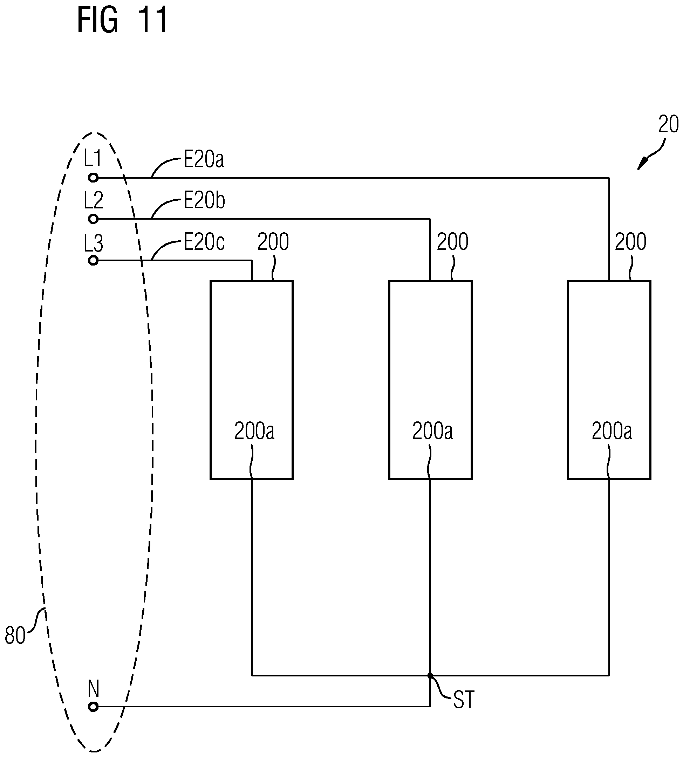

Die Figur 11 zeigt ein weiteres Ausführungsbeispiel für eine Umrichtereinrichtung 20, die bei der Anordnung 10 gemäß Figur 1 eingesetzt werden kann. Im Unterschied zu dem Ausführungsbeispiel gemäß Figur 2 sind die Reihenschaltungen 200 der Umrichtereinrichtung 20 nicht im Dreieck verschaltet, sondern sternförmig unter Bildung einer Sternschaltung. Der durch die Verschaltung gebildete Sternpunkt ist in der Figur 11 mit dem Bezugszeichen ST gekennzeichnet. An den Sternpunkt ST kann ein Rückleiter N, beispielsweise der Rückleiter der dreiphasigen Leitung 80 gemäß Figur 1, angeschlossen werden.

Der Aufbau der Reihenschaltungen 200 ist in der Figur 11 aus Gründen der Übersicht nicht näher dargestellt. Die Reihenschaltungen 200 können beispielsweise den Reihenschaltungen 200 der Umrichtereinrichtung 20 gemäß Figur 2 entsprechen bzw. so aufgebaut sein, wie dies im Zusammenhang mit den Figuren 3 bis 8 oben im Detail beispielhaft erläutert worden ist. Bezüglich des Aufbaus der Reihenschaltungen 200 gemäß Figur 11 gelten die obigen Ausführungen somit entsprechend.

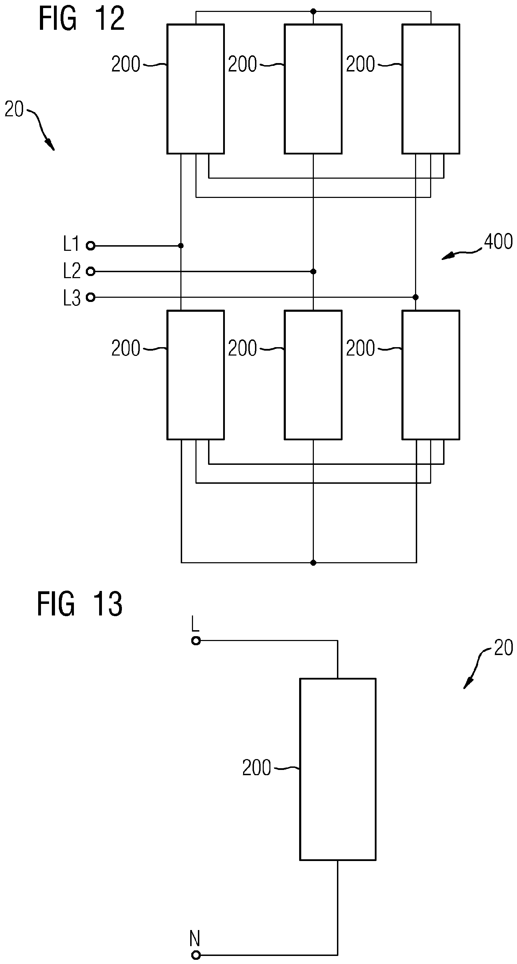

Die Figur 12 zeigt ein Ausführungsbeispiel für eine Umrichtereinrichtung 20, bei der Reihenschaltungen 200, die jeweils mindestens zwei in Reihe geschaltete und aus Gründen der Übersicht in der Figur 12 nicht gezeigte Teilmodule aufweisen, eine Brückenschaltung 400 bilden.

Der Aufbau der Reihenschaltungen 200 der Umrichtereinrichtung 20 kann beispielsweise dem Aufbau der Reihenschaltungen 200 entsprechen, wie sie im Zusammenhang mit den Figuren 2 bis 8 oben im Detail erläutert worden sind.

Die Figur 13 zeigt ein Ausführungsbeispiel für eine einphasige Umrichtereinrichtung 20, die eine Reihenschaltung 200 mit einer Vielzahl an in Reihe geschalteten und in der Figur 13 aus Gründen der Übersicht nicht weiter dargestellten Teilmodulen umfasst. Die Reihenschaltung 200 der Anordnung 20 gemäß Figur 13 kann von ihrem Aufbau den Reihenschaltungen 200 entsprechen, wie sie im Zusammenhang mit den Figuren 2 bis 8 oben im Detail erläutert worden sind.

Die Umrichtereinrichtung 20 bzw. die Reihenschaltung 200 kann an ein einphasiges Wechselspannungsnetz (wie gezeigt) oder alternativ an ein Gleichspannungsnetz, beispielsweise an einen Gleichspannungskreis einer Hochspannungs-Gleichstrom-Übertragungseinrichtung (HGÜ), angeschlossen werden. Im letztgenannten Fall handelt es sich bei dem Eingangsmodul 221 vorzugsweise um einen DC/DC-Steller bzw. Gleichspannungs/- Gleichspannungs-Umsetzer.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

### Bezugszeichenliste

- 10: Anordnung
- 20: Umrichtereinrichtung
- 30: Ansteuerschaltung
- 40: Stromsensor
- 50: Spannungssensor
- 80: elektrische Leitung
- 90: Anschlussschiene
- 100: Energieverteilnetz
- 110: elektrische Gleichstromleitung
- 200: Reihenschaltung
- 210: Stromsensor
- 220: Teilmodule
- 221: Eingangsmodul
- 222: Hochsetz-Tiefsetzsteller
- 223: Speichermodul
- 225: Schutzmodul
- 230: Induktivität
- 400: Brückenschaltung
- 500: Stromsensor
- 510: Stromsensor
- 530: Spannungssensor
- 540: Auslöseeinheit
- 550: Betragsbildner
- 551: Betragsbildner
- 552: Betragsbildner
- 560: Komparator
- 561: Komparator
- 562: Komparator
- 570: Oder-Glied

- A1: Aktuator
- A2: Aktuator
- A3: Aktuator
- A221a: Ausgangsanschluss des Eingangsmoduls
- A221b: Ausgangsanschluss des Eingangsmoduls
- A222a: Ausgangsanschluss des Hochsetz-Tiefsetzstellers
- A222b: Ausgangsanschluss des Hochsetz-Tiefsetzstellers
- A225a: Ausgangsanschluss des Schutzmoduls
- A225b: Ausgangsanschluss des Schutzmoduls
- C: Kondensator
- E20a: Eingangswechselspannungsanschluss
- E20b: Eingangswechselspannungsanschluss
- E20c: Eingangswechselspannungsanschluss
- E220a: Eingangsanschluss des Teilmoduls
- E220b: Eingangsanschluss des Teilmoduls
- E221a: Eingangsanschluss des Eingangsmoduls
- E221b: Eingangsanschluss des Eingangsmoduls
- E222a: Eingangsanschluss des Hochsetz-Tiefsetzstellers
- E222b: Eingangsanschluss des Hochsetz-Tiefsetzstellers
- E223a: Eingangsanschluss des Speichermoduls
- E223b: Eingangsanschluss des Speichermoduls
- H222: H-Brückenschaltung
- E225a: Eingangsanschluss des Schutzmoduls
- E225b: Eingangsanschluss des Schutzmoduls
- I225e: Strom
- I225a: Strom
- Ie: Eingangswechselstrom
- L: Induktivität
- L1: Phase
- L2: Phase
- L3: Phase
- M1: Mittenanschluss
- M2: Mittenanschluss
- Mw1: Messwert
- Mw2: Messwert
- Mw3: Messwert
- N: Rückleiter
- Q225: innerer Anschluss des Schutzmoduls
- ST: Sternpunkt
- ST1: Auslösesignal
- ST2: Auslösesignal
- S1: Schaltelement
- S2: Schaltelement
- S3: Schaltelement
- S4: Schaltelement
- S5: Schaltelement
- S6: Schaltelement
- S7: Schaltelement
- S8: Schaltelement
- U225: Spannung

## Patentansprüche

1. Anordnung (10), die zumindest eine Reihenschaltung (200) mit mindestens zwei in Reihe geschalteten Teilmodulen (220) und einer Induktivität (230) umfasst, wobei
- zumindest eines der Teilmodule (220) einer oder mehrerer der Reihenschaltungen (200) einen Hochsetz-Tiefsetzsteller (222) und ein Speichermodul (223) aufweist,
**dadurch gekennzeichnet, dass**
- elektrisch zwischen den Hochsetz-Tiefsetzsteller (222) und das Speichermodul (223) ein Schutzmodul (225) mit mindestens einem ersten und einem zweiten Aktuator (A1, A2, A3) geschaltet ist, wobei
das Schutzmodul (225) eine Auslöseeinheit (540) aufweist, die dazu ausgelegt ist, ein Auslösesignal (ST1) zum Einschalten oder elektrischen Schließen zumindest eines der Aktuatoren (A1, A2, A3) zu erzeugen, wenn zumindest ein Messwert einen Fehlerfall anzeigt, insbesondere eine vorgegebene Schwelle erreicht oder überschreitet, wobei
- die Auslöseeinheit (540) derart ausgestaltet ist, dass sie das Auslösesignal (ST1) erzeugt, wenn der Betrag des Stromes an einem ersten oder zweiten Eingangsanschluss des Schutzmoduls (225) eine vorgegebene erste Stromschwelle, der Betrag des Stromes an einem ersten oder zweiten Ausgangsanschluss des Schutzmoduls (225) eine vorgegebene zweite Stromschwelle und/oder der Betrag der Spannung zwischen dem ersten und zweiten Ausgangsanschluss des Schutzmoduls (225) eine vorgegebene Spannungsschwelle erreicht oder überschreitet, wobei
- das Schutzmodul (225) einen ersten und einen zweiten Eingangsanschluss zum Anschluss an den Hochsetz-Tiefsetzsteller (222) und mindestens zwei Aktuatoren aufweist, von denen ein zweiter Aktuator (A2, A3) zwischen den ersten Eingangsanschluss des Schutzmoduls (225) und einen inneren Anschluss des Schutzmoduls (225) oder zwischen den ersten Ausgangsanschluss des Schutzmoduls (225) und einen inneren Anschluss des Schutzmoduls (225) und ein erster Aktuator (A1) zwischen den inneren Anschluss des Schutzmoduls (225) und den zweiten Eingangsanschluss geschaltet ist, wobei der erste Aktuator (A1) ein irreversibel schaltender pyrotechnisch angetriebener Schalter und der zweite Aktuator (A2) eine Schmelzsicherung ist, wobei der erste Aktuator (A1) elektrisch derart angeordnet ist, dass er im eingeschalteten Zustand einen ersten und einen zweiten Eingangsanschluss, mit denen das Schutzmodul (225) an den Hochsetz-Tiefsetzsteller (222) angeschlossen ist, und/oder einen ersten und einen zweiten Ausgangsanschluss, mit denen das Schutzmodul (225) an das Speichermodul (223) angeschlossen ist, kurzschließt.

2. Anordnung (10) nach einem der voranstehenden Ansprüche,
**dadurch gekennzeichnet, dass**
- das Schutzmodul (225) einen ersten und einen zweiten Eingangsanschluss zum Anschluss an den Hochsetz-Tiefsetzsteller (222) und einen ersten und einen zweiten Ausgangsanschluss zum Anschluss an das Speichermodul (223) aufweist und
- der zweite Eingangsanschluss und der zweite Ausgangsanschluss miteinander verbunden sind.

3. Anordnung (10) nach Anspruch 2,
**dadurch gekennzeichnet, dass** das Schutzmodul (225) mindestens drei Aktuatoren (A1, A2, A3) aufweist, wobei
- der zweite Aktuator (A2) zwischen den ersten Ausgangsanschluss des Schutzmoduls (225) und den inneren Anschluss des Schutzmoduls (225) geschaltet ist und
- ein dritter Aktuator (A3) zwischen den ersten Eingangsanschluss des Schutzmoduls (225) und den inneren Anschluss des Schutzmoduls (225) geschaltet ist.

4. Anordnung (10) nach Anspruch 3,
**dadurch gekennzeichnet, dass** der dritte Aktuator (A3) eine Schmelzsicherung ist.

5. Anordnung (10) nach Anspruch 1,
**dadurch gekennzeichnet, dass** die Auslöseeinheit (540) derart ausgestaltet ist, dass sie zumindest einen Schalter (S6, S6 und S8) in dem vorgeordneten Hochsetz-Tiefsetzsteller (222) einschaltet, wenn der Betrag des Stromes am ersten oder zweiten Eingangsanschluss des Schutzmoduls (225) die erste Stromschwelle erreicht oder überschreitet.

## Claims

1. Arrangement (10) which comprises at least one series circuit (200) including at least two series-connected submodules (220) and an inductor (230), wherein
- at least one of the submodules (220) of one or a plurality of the series circuits (200) includes a step-up/step-down converter (222) and a storage module (223), **characterized in that**
- a protective module (225) including at least one first and one second actuator (A1, A2, A3) is electrically connected between the step-up/step-down converter (222) and the storage module (223), wherein
the protective module (225) has a triggering unit (540) which is designed to generate a trigger signal (ST1) for activating or electrically closing at least one of the actuators (A1, A2, A3) if at least one measured value indicates a fault, in particular reaches or exceeds a predefined threshold, wherein
- the triggering unit (540) is designed in such a way that it generates the trigger signal (ST1) if the magnitude of the current at a first or second input terminal of the protective module (225) reaches or exceeds a predefined first current threshold, the magnitude of the current at a first or second output terminal of the protective module (225) reaches or exceeds a predefined second current threshold, and/or the magnitude of the voltage between the first and second output terminals of the protective module (225) reaches or exceeds a predefined voltage threshold, wherein
- the protective module (225) has a first and a second input terminal for connecting to the step-up/step-down converter (222), and at least two actuators, of which a second actuator (A2, A3) is connected between the first input terminal of the protective module (225) and an internal terminal of the protective module (225) or between the first output terminal of the protective module (225) and an internal terminal of the protective module (225) and a first actuator (A1) between the internal terminal of the protective module (225) and the second input terminal, wherein the first actuator (A1) is an irreversibly switching pyrotechnically driven switch and the second actuator (A2) is a fuse, wherein the first actuator (A1) is electrically arranged in such a way that, in the activated state, it short-circuits a first and a second input terminal via which the protective module (225) is connected to the step-up/step-down converter (222), and/or it short-circuits a first and a second output terminal via which the protective module (225) is connected to the storage module (223) .

2. Arrangement (10) according to one of the preceding claims,
**characterized in that**
- the protective module (225) has a first and a second input terminal for connecting to the step-up/step-down converter (222), and has a first and a second output terminal for connecting to the storage module (223), and
- the second input terminal and the second output terminal are interconnected.

3. Arrangement (10) according to Claim 2,
**characterized in that**
the protective module (225) has at least three actuators (A1, A2, A3), wherein
- the second actuator (A2) is connected between the first output terminal of the protective module (225) and the internal terminal of the protective module (225), and
- a third actuator (A3) is connected between the first input terminal of the protective module (225) and the internal terminal of the protective module (225).

4. Arrangement (10) according to Claim 3,
**characterized in that**
the third actuator (A3) is a fuse.

5. Arrangement (10) according to Claim 1,
**characterized in that**
the triggering unit (540) is designed in such a way that it activates at least one switch (S6, S6 and S8) in the upstream step-up/step-down converter (222) if the magnitude of the current at the first or second input terminal of the protective module (225) reaches or exceeds the first current threshold.

## Revendications

1. Ensemble (10), qui comprend au moins un circuit (200) série ayant au moins deux modules (220) partiels montés en série et une inductance (230), dans lequel
- au moins l'un des modules (220) partiels de l'un ou de plusieurs des circuits (200) série a un survolteur-dévolteur (222) et un module (223) d'accumulateur,
**caractérisé en ce que**
- un module (225) de protection ayant au moins un premier et un deuxième actionneurs (A1, A2, A3) est monté électriquement entre le survolteur-dévolteur (222) et le module (223) d'accumulateur, dans lequel
le module (225) de protection a une unité (540) de déclenchement, qui est conçue pour produire un signal (ST1) de déclenchement pour enclencher ou fermer électriquement au moins l'un des actionneurs (A1, A2, A3) si au moins une valeur de mesure indique un cas de défaut, notamment si un seuil donné à l'avance est atteint ou dépassé, dans lequel
- l'unité (540) de déclenchement est conformée de manière à produire le signal (ST1) de déclenchement si la valeur absolue du courant à une première ou deuxième borne d'entrée du module (225) de protection atteint ou dépasse un premier seuil de courant donné à l'avance, si la valeur absolue du courant à une première ou une deuxième borne de sortie du module (225) de protection atteint ou dépasse un deuxième seuil de courant donné à l'avance et/ou si la valeur absolue de la tension entre la première et la deuxième borne de sortie du module (225) de protection atteint ou dépasse un seuil de tension donné à l'avance, dans lequel
- le module (225) de protection a une première et une deuxième borne d'entrée pour la connexion au survolteur-dévolteur (222) et au moins deux actionneurs, dont un deuxième actionneur (A2, A3) est monté entre la première borne d'entrée du module (225) de protection et une borne intérieure du module (225) de protection ou entre la première borne de sortie du module (225) de protection et une borne intérieure du module (225) de protection et un premier actionneur (A1) est monté entre la borne intérieure du module (225) de protection et la deuxième borne d'entrée, dans lequel le premier actionneur (A1) est un interrupteur à entraînement pyrotechnique à coupure irréversible et le deuxième actionneur (A2) est un coupe-circuit à fusible, dans lequel le premier actionneur (A1) est monté électriquement de manière à court-circuiter, dans l'état fermé, une première et une deuxième bornes d'entrée, par lesquelles le module (225) de protection est connecté au survolteur-dévolteur (222) et/ou une première et une deuxième borne de sortie, par lesquelles le module (225) de protection est connecté au module (223) d'accumulateur.

2. Ensemble (10) suivant l'une des revendications précédentes, **caractérisé en ce que**
- le module (225) de protection a une première et une deuxième bornes d'entrée pour la connexion au survolteur-dévolteur (222) et une première et une deuxième bornes de sortie pour la connexion au module (223) d'accumulateur et
- la deuxième borne d'entrée et la deuxième borne de sortie sont reliées entre elles.

3. Ensemble (10) suivant la revendication 2,
**caractérisé en ce que**
le module (225) de protection a au moins trois actionneurs (A1, A2, A3), dans lequel
- le deuxième actionneur (A2) est monté entre la première borne de sortie du module (225) de protection et la borne intérieure du module (225) de protection et
- un troisième actionneur (A3) est monté entre la première borne d'entrée du module (225) de protection et la borne intérieure du module (225) de protection.

4. Ensemble (10) suivant la revendication 3,
**caractérisé en ce que**
le troisième actionneur (A3) est un coupe-circuit à fusible.

5. Ensemble (10) suivant la revendication 1,
**caractérisé en ce que**
l'unité (540) de déclenchement est conformée de manière à fermer au moins un interrupteur (S6, S6 et S8) dans le survolteur-dévolteur (222) en amont si la valeur absolue du courant à la première ou à la deuxième borne d'entrée du module (225) de protection atteint ou dépasse le premier seuil de courant.
